# EUROPEAN PATENT SPECIFICATION

(11) **EP 3 845 740 B1**
(45) Date of publication and mention of the grant of the patent: **03.04.2024**
(21) Application number: 19425103.9
(22) Date of filing: 31.12.2019
(51) Int. Cl.: F01D 17/08, F23R 3/02

(54) **GAS TURBINE ASSEMBLY**
GASTURBINENANORDNUNG
ENSEMBLE DE TURBINE À GAZ

(43) Date of publication of application: 07.07.2021
(73) Proprietor: ANSALDO ENERGIA S.p.A., 16152 Genova (IT)
(72) Inventor: Campa, Giovanni, 16154 Genova (IT); Chiarioni, Aldo, 16132 Genova (IT)
(74) Representative: Studio Torta S.p.A.

(56) References cited:
- EP-A1- 2 722 508
- EP-A2- 1 387 062
- JP-A- H07 166 892
- US-A1- 2003 159 446
- US-A1- 2009 217 672
- US-A1- 2018 230 913
- US-A1- 2019 086 085

## Description

### Field of the Invention

The present invention relates to a gas turbine assembly.

In particular, the gas turbine assembly of the present invention is part of a plant for the production of electrical energy.

### Background

As is known, a gas turbine assembly for power plants comprises a compressor, a combustor and a turbine.

In particular, the compressor comprises an inlet supplied with air and a plurality of rotating blades compressing the passing air. The compressed air leaving the compressor flows into a plenum, i.e. a closed volume delimited by an outer casing, and from there into the combustor. Inside the combustor, the compressed air is mixed with at least one fuel and combusted. The resulting hot gas leaves the combustor and expands in the turbine. In the turbine the hot gas expansion moves rotating blades connected to a rotor, performing work.

In recent years, under the pressure of increasingly stringent regulations in terms of emissions of polluting substances, combustion techniques have been oriented towards the use of the so-called "lean premix" technology, which provides for the use of combustors in which the fuel is premixed with air before being burned.

In combustors of this type, in which lean fuel mixtures are burned, at high powers, acoustic oscillations may be triggered spontaneously (here and hereinafter identified with the term 'humming' typically used in the sector of reference), which are destructive to the structural integrity of the combustor.

Therefore monitoring the acoustic pressure oscillations in the combustor is fundamental for a reliable and efficient operation of the gas turbine assembly.

However, the monitoring of the acoustic pressure oscillations should be performed in reliable manner as the risks connected to a not optimal monitoring are really serious: reduction of the power output and loss of the integrity of components of the combustor.

However, the current solutions are not able to detect pressure fluctuations in a reliable way. In particular, known solutions do not show a full sensibility to the dynamic phenomena of interest for the correct engine operations, especially for some frequency bandwidths of interest.

Some known solutions are disclosed in documents US 2019/086085, US 2018/230913, EP 1387062, US 2009/217672, EP 2722508.

### Summary

It is therefore an object of the present invention to provide a gas turbine assembly, which enables avoiding or at least mitigating the described drawbacks.

In particular, it is an object of the present invention to provide a gas turbine assembly configured to allow a reliable detection of pressure fluctuations.

According to the present invention, there is provided a gas turbine assembly comprising:
- a compressor configured to compress air; the compressor extending along a longitudinal axis and being provided with an outlet diffuser and with a compressor casing;
- a plenum, which is a closed volume delimited at least by an outer casing coupled to the compressor casing and by the outlet diffuser; the outlet diffuser being designed to discharge the compressed air into the plenum;
- a combustor partially arranged in the plenum;
- at least one pressure sensor facing an area of the plenum comprised between the outer casing and the outlet diffuser.

Thanks to the arrangement of the pressure sensor according to the present invention, an enhanced monitoring of the pressure amplitudes is achieved, with appreciable improvements in the engine tuning and operation and without affecting the overall engine efficiency in terms of air consumption or variations in the operating conditions. In particular, thanks to the location of the pressure sensor according to the present invention a better sensitivity to all the frequency bandwidths of interest is achieved.

Advantageously, the present invention can be applied on existing gas turbine assemblies.

### Brief description of the drawings

The present invention will now be described with reference to the accompanying drawings, which illustrate some non-limiting embodiments, in which:
- Figure 1 is a schematic section view, with parts removed, of a gas turbine assembly according to the present invention;
- Figure 2 is an enlarged view of a detail of the a gas turbine assembly of figure 1;

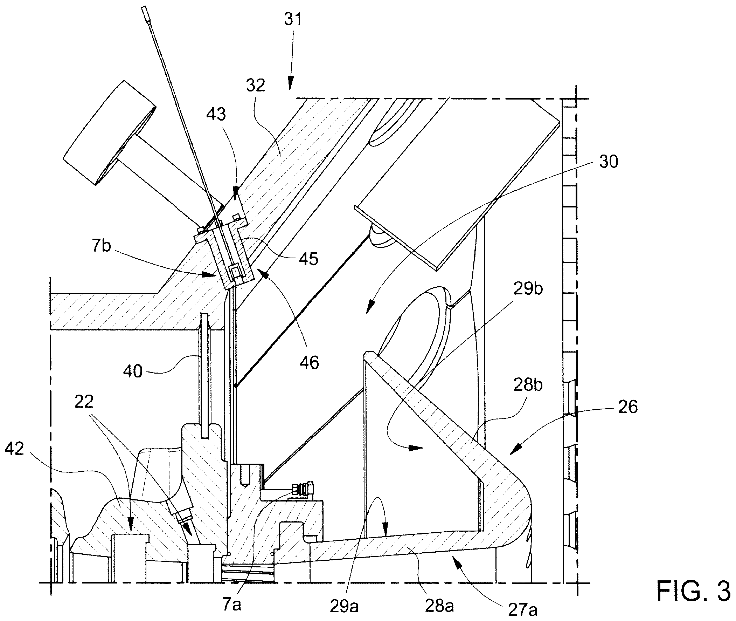

- Figure 3 is a schematic section view, with parts removed, of a further detail of the gas turbine assembly of figure 1;
- Figure 4 is a schematic section view, with parts removed, of the further detail of the gas turbine assembly of figure 2 according to an alternative embodiment.

### Detailed description of exemplary embodiments

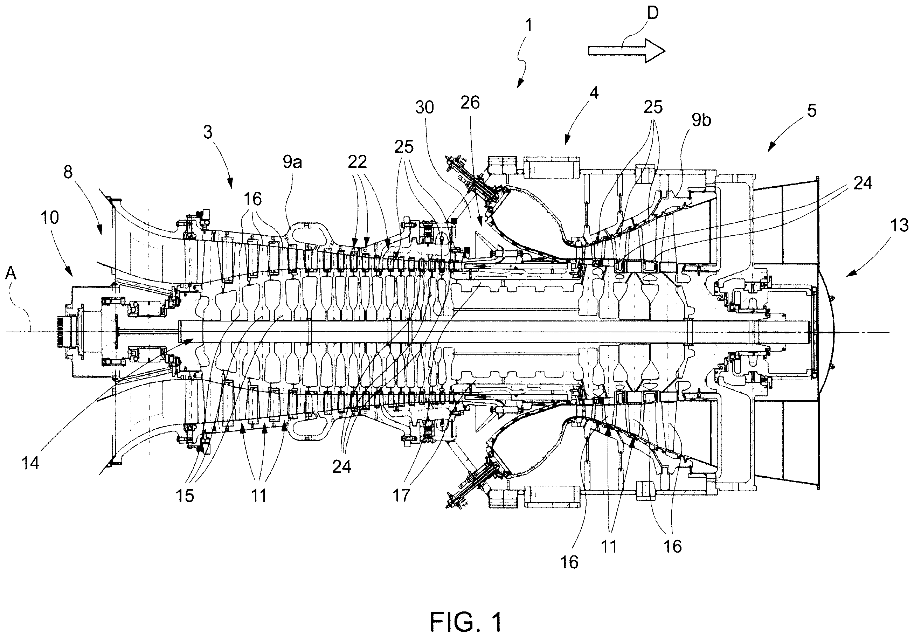

In figure 1 reference numeral 1 indicates a gas turbine assembly (schematically shown in Figure 1).

The gas turbine assembly 1 comprises a compressor 3, a combustor 4, a gas turbine 5, at least one pressure sensor 7 and a control device (not shown in the attached figures).

The compressor 3 and the turbine 5 are mounted on the same shaft to form a rotor 8, which extends along an axis A.

The rotor 8 is coupled to a generator (for simplicity, not shown in the attached figures).

In greater detail, the rotor 8 comprises a front shaft 10, a plurality of rotor assemblies 11 and a rear shaft 13.

Each rotor assembly 11 comprises a rotor disk 15 and a plurality of rotor blades 16 coupled to the rotor disk 15 and radially arranged.

The plurality of rotor disks 15 are arranged in succession between the front shaft 10 and the rear shaft 13 and preferably clamped as a pack by a central tie rod 14. As an alternative, the rotor disks may be welded together.

A central shaft 17 separates the rotor disks 15 of the compressor 3 from the rotor disks 15 of the turbine 5 and extends through the combustor 4.

Further, stator assemblies 22 are alternated with the compressor rotor assemblies 11.

Each stator assembly 22 comprises a stator ring 24 and a plurality of stator vanes 25, which are radially arranged and coupled to the stator ring 24.

In particular, stator vanes 25 in the compressor 3 are coupled to the stator ring 24 and to a compressor stator casing 9a, while stator vanes 25 in the turbine 5 are coupled to the stator ring 24 and to a turbine stator casing 9b.

Compressor 3 is also provided with an outlet diffuser 26, which is arranged at the outlet of the compressor 3.

The diffuser 26 is designed to discharge the compressed air into a plenum 30.

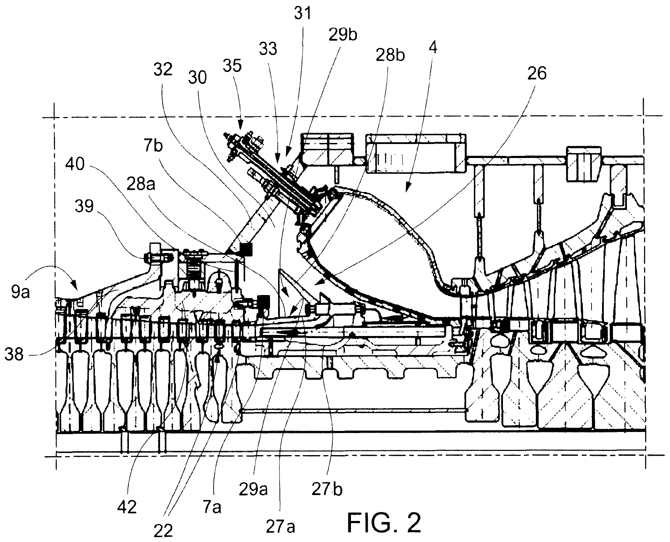

With reference to figure 2, diffuser 26 comprises two shells 27a 27b defining a channel having an increasing section in order to obtain a reduction in velocity of the evolving airflow. Shells 27a 27b are coupled to compressor stator casing 9a.

Preferably, the shell 27a facing the plenum 30 is provided with a first portion 28a, which is substantially cylindrical, and with a second portion 28b folded on the first portion 28a, which is substantially truncated cone shaped. The first portion 28a defines an outer face 29a, while the second portion defines substantially an outer face 29b.

The plenum 30 is a closed volume delimited at least by an outer casing 31 and by the outlet diffuser 26, wherein compressed air coming from the outlet diffuser 26 is collected.

The plenum 30 is delimited also by other parts of the gas turbine assembly 1, as the gas turbine casing 9b.

In the plenum 30 at least a part of the combustor 4 is arranged.

The outer casing 31 is coupled to the compressor stator casing 9a.

Preferably, the outer casing 31 has at least one portion 32 which is truncated-cone shaped.

Preferably, the portion 32 is provided with a plurality of holes 33 housing the fuel supply conduits 35 of combustor 4.

Preferably, the portion 32 has a radius increasing towards the turbine 5.

Preferably, the outer casing 31 is fixed to a first portion 38 of the compressor stator casing 9a by means of bolts 39.

Preferably, a diaphragm 40 is arranged between a second portion 42 of the compressor stator casing 9a and the outer casing 31.

Preferably, the diaphragm 40 is arranged on a plane substantially orthogonal to longitudinal axis A.

More preferably, the diaphragm 40 is arranged substantially at the same axial position of the last stator stage 22 of the compressor 3.

The diaphragm 40 is preferably coupled substantially to the end of the portion 32 having the minimum radius.

Preferably, the second portion 42 of the compressor stator casing 9a is configured to support at least the last stator stage 22 of the compressor 3.

In the non-limiting example here disclosed and illustrated, the second portion 42 of the compressor stator casing 9a is configured to support the last seven stator stages 22 of the compressor 3.

Diffuser 26 is coupled to the second portion 42 of the compressor stator casing 9a.

Preferably, the outer casing 31 is also coupled to the turbine stator casing 9b.

In use, the compressor 3 is supplied with air. In the compressor 3 the rotation of the compressor rotor assemblies 11, which are alternated with the stator assemblies 22, compress the passing air.

The compressed air leaving the compressor 3 flows into the plenum 30 through the diffuser 26. Compressed air flows from the plenum 30 into the combustor 4. Inside the combustor 4, the compressed air is mixed with at least one fuel and combusted. The resulting hot gas leaves the combustor 4 and expands in the turbine 5.

In the compressor 3 and in the turbine 5 the flows advance along an advancing direction D.

With reference to figure 2, the gas turbine assembly 1 comprises at least one pressure sensor 7 facing an area of the plenum 30 comprised between the diffuser 26 and the outer casing 31.

Preferably, the gas turbine assembly 1 comprises at least one pressure sensor 7 facing an area of the plenum 30 comprised between the diffuser 26 and the portion 32 of the outer casing 31.

Preferably, the gas turbine assembly 1 comprises at least one pressure sensor 7a arranged in the plenum 30 between the diffuser 26 and the portion 32 of the outer casing 31 closer to the diffuser 26 than to the outer casing 31.

Preferably, the gas turbine assembly 1 comprises at least one pressure sensor 7a arranged between the diffuser 26 and the portion 32 of the outer casing 31 closer to the diffuser 26.

More preferably, the pressure sensor 7a faces the area comprised between the outer face 29a and the outer face 29b.

In the non-limiting example here disclosed and illustrated, the pressure sensor 7a is arranged close to the area of coupling between shell 27a and the compressor stator casing 9a.

Preferably, the pressure sensor 7a is coupled to the portion of the shell 27a coupled to the compressor stator casing 9a.

In the non-limiting example here disclosed and illustrated, a plurality of pressure sensors 7a is arranged along a circumference extending about the longitudinal axis A. In other words, pressure sensors 7a are arranged in different sectors of the plenum 30.

Preferably, the gas turbine assembly 1 comprises at least one pressure sensor 7b arranged in a pressure tap 43 made in the outer casing 31.

In the non-limiting example here disclosed and illustrated, the pressure tap 43 is defined by a tube 45 housed in a hole 46 of the outer casing 31.

Preferably the hole 46 is made in the portion 32 of the outer casing 31.

According to a variant not shown the sensor can be arranged between the diffuser 26 and the portion 32 of the outer casing 31 closer to the outer casing 31 than to the diffuser 26.

In the non-limiting example here disclosed and illustrated, a plurality of pressure sensors 7b is arranged along a circumference extending about the longitudinal axis A. In other words, pressure sensors 7b are arranged in different sectors of the plenum 30.

According to an embodiment not shown, the gas turbine assembly comprises only one sensor between sensor 7a and sensor 7b.

Sensor data detected by sensor 7a and/or sensor 7b are sent to control device 8.

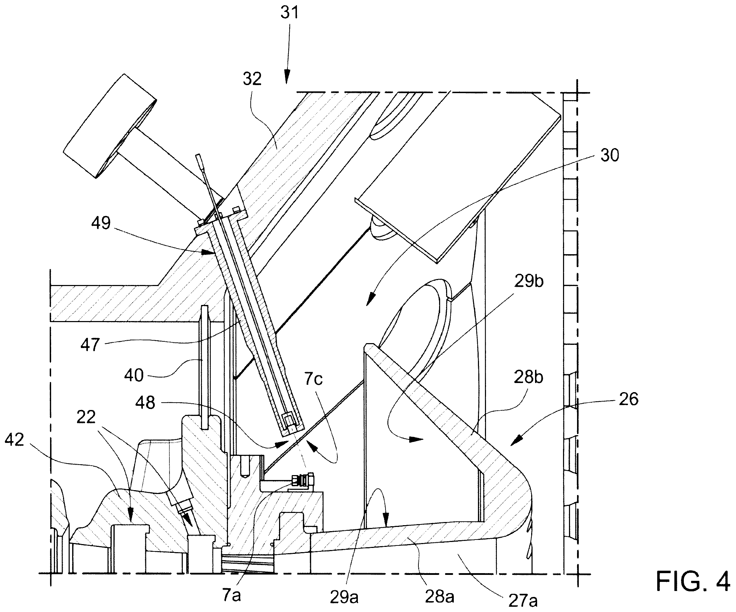

Figure 4 shows an alternative embodiment according to the present invention, wherein sensor 7b is replaced by a sensor 7c which is arranged at the end 48 of a duct 47 extending from the outer casing 31 into the plenum 30. The duct 47 is oriented so as the end 48 is arranged closer to the diffuser 26 than to the outer casing 31.

In the non-limiting example here disclosed and illustrated, the duct 47 is housed in a hole 49 of the outer casing 31.

Preferably the hole 49 is made in the portion 32 of the outer casing 31.

In the non-limiting example here disclosed and illustrated, a plurality of pressure sensors 7c is arranged along a circumference extending about the longitudinal axis A. In other words, pressure sensors 7c are arranged in different sectors of the plenum 30.

Sensor data detected by sensor 7a and/or sensor 7c are sent to control device 8.

According to an embodiment not shown, the gas turbine assembly comprises only one sensor between sensor 7a and sensor 7c.

According to an embodiment not shown, the gas turbine assembly comprises all the sensors 7a, 7b and 7c.

Preferably, the overall number of pressure sensors 7a and/or 7b and/or 7c to be installed in the combustor 4 is mainly related to the acoustic modes that have to be monitored.

The final position of the sensors 7a and/or 7b and/or 7c depends on the acoustic modes to be monitored taking into account also thermo-structural behaviors and/or the necessity to avoid any kind of interference with existing components.

Preferably, pressure sensors 7a and/or 7b and/or 7c are pressure probes.

Finally, it is clear that modifications and variants can be made to the gas turbine assembly described herein without departing from the scope of the present invention, as defined in the appended claims.

## Claims

1. Gas turbine assembly comprising:
• a compressor (3) configured to compress air; the compressor (3) extending along a longitudinal axis and being provided with an outlet diffuser (26) and with a compressor casing (9a);
• a plenum (30), which is a closed volume delimited at least by an outer casing (31) coupled to the compressor casing (9a) and by the outlet diffuser (26); the outlet diffuser (26) being designed to discharge the compressed air into the plenum (30);
• a combustor (4) partially arranged in the plenum (30);
**characterized by**
• at least one pressure sensor (7; 7a; 7b; 7c) facing an area of the plenum (30) comprised between the outer casing (31) and the outlet diffuser (26).

2. Gas turbine assembly according to claim 1, wherein the outer casing (31) comprises a portion (32) being truncated-cone shaped; the at least one pressure sensor (7; 7a; 7b; 7c) being facing an area of the plenum (30) between the portion (32) and the outlet diffuser (26).

3. Gas turbine assembly according to claim 1 or 2, wherein at least one first sensor (7a) is arranged in the area of the plenum (30) comprised between the outer casing (31) and the outlet diffuser (26) closer to the outlet diffuser (26) than to the outer casing (31).

4. Gas turbine assembly according to claim 3, wherein the outlet diffuser (26) comprises at least two shells (27a 27b) defining a channel having an increasing section, which are coupled to compressor stator casing (9a); the shell (27a) facing the plenum (30) being provided with a first portion (28a), which is substantially cylindrical, and with a second portion (28b) folded on the first portion (28a), which is substantially truncated-cone shaped; the first portion (28a) defining a first outer face (29a); the second portion defining a second outer face (29b).

5. Gas turbine assembly according to claim 4, wherein at least one first sensor (7a) is arranged so as to face the area comprised between the first outer face (29a) and the second outer face (29b).

6. Gas turbine assembly according to anyone of claims from 3 to 5, wherein the first pressure sensor (7a) is arranged close to the area of coupling between outlet diffuser (26) and the compressor stator casing (9a).

7. Gas turbine assembly according to anyone of claims from 3 to 6, comprising a plurality of first pressure sensors (7a) arranged along a circumference extending about the longitudinal axis (A).

8. Gas turbine assembly according to anyone of the foregoing claims, wherein at least one second pressure sensor (7b) is arranged between the diffuser (26) and the outer casing (31) closer to the outer casing (31) than to the diffuser (26) .

9. Gas turbine assembly according to anyone of the foregoing claims, wherein at least one second pressure sensor (7b) is arranged in a pressure tap (43) made in the outer casing (31).

10. Gas turbine assembly according to claim 9, wherein the pressure tap (43) is defined by a tube (45) housed in a hole (46) of the outer casing (31).

11. Gas turbine assembly according to anyone of claims from 8 to 10, comprising a plurality of second pressure sensors (7b) arranged along a circumference extending about the longitudinal axis (A).

12. Gas turbine assembly according to anyone of the foregoing claims, wherein at least one third sensor (7c) is arranged at the end (48) of a duct (47) extending from the outer casing (31) into the plenum (30).

13. Gas turbine assembly according to claim 12, wherein the duct (47) is oriented so as the end (48) is arranged closer to the outlet diffuser (26) than to the outer casing (31) .

14. Gas turbine assembly according to claim 12 or 13, wherein the duct (47) is housed in a hole (49) of the outer casing (31).

15. Gas turbine assembly according to anyone of claims from 12 to 14, comprising a plurality of third pressure sensors (7c) arranged along a circumference extending about the longitudinal axis (A).

## Patentansprüche

1. Gasturbinenanordnung, die Folgendes umfasst:
einen Kompressor (3), der konfiguriert ist, Luft zu verdichten; wobei der Kompressor (3) entlang einer Längsachse verläuft und mit einem Auslassdiffusor (26) und mit einem Kompressorgehäuse (9a) versehen ist;
eine Luftkammer (30), die ein geschlossenes Volumen ist, das mindestens durch ein Außengehäuse (31), das an das Kompressorgehäuse (9a) gekoppelt ist, und durch den Auslassdiffusor (26) begrenzt ist; wobei der Auslassdiffusor (26) ausgelegt ist, die Druckluft an die Luftkammer (30) abzugeben; und
eine Brennkammervorrichtung (4), die teilweise in der Luftkammer (30) angeordnet ist;
**gekennzeichnet durch**
mindestens einen Drucksensor (7; 7a; 7b; 7c), der
einem Bereich der Luftkammer (30) zugewandt ist, der zwischen dem Außengehäuse (31) und dem Auslassdiffusor (26) enthalten ist.

2. Gasturbinenanordnung nach Anspruch 1, wobei das Außengehäuse (31) einen Abschnitt (32) umfasst, der kegelstumpfförmig ist; und der mindestens eine Drucksensor (7; 7a; 7b; 7c) einem Bereich der Luftkammer (30) zwischen dem Abschnitt (32) und dem Auslassdiffusor (26) zugewandt ist.

3. Gasturbinenanordnung nach Anspruch 1 oder 2, wobei mindestens ein erster Sensor (7a) in dem Bereich der Luftkammer (30), der zwischen dem Außengehäuse (31) und dem Auslassdiffusor (26) enthalten ist, näher beim Auslassdiffusor (26) als beim Außengehäuse (31) angeordnet ist.

4. Gasturbinenanordnung nach Anspruch 3, wobei der Auslassdiffusor (26) mindestens zwei Gehäuse (27a, 27b) umfasst, die einen Kanal, der einen zunehmenden Querschnitt besitzt, definieren und an das Kompressorstatorgehäuse (9a) gekoppelt sind; wobei das Gehäuse (27a), das der Luftkammer (30) zugewandt ist, mit einem ersten Abschnitt (28a), der im Wesentlichen zylindrisch ist, und mit einem zweiten Abschnitt (28b), der auf den ersten Abschnitt (28a) geklappt ist und im Wesentlichen kegelstumpfförmig ist, versehen ist; der erste Abschnitt (28a) eine erste Außenfläche (29a) definiert und der zweite Abschnitt eine zweite Außenfläche (29b) definiert.

5. Gasturbinenanordnung nach Anspruch 4, wobei mindestens ein erster Sensor (7a) derart angeordnet ist, dass er dem Bereich zugewandt ist, der zwischen der ersten Außenfläche (29a) und der zweiten Außenfläche (29b) enthalten ist.

6. Gasturbinenanordnung nach einem der Ansprüche 3 bis 5, wobei der erste Drucksensor (7a) in der Nähe des Bereichs der Kopplung zwischen dem Auslassdiffusor (26) und dem Kompressorstatorgehäuse (9a) angeordnet ist.

7. Gasturbinenanordnung nach einem der Ansprüche 3 bis 6, die mehrere erste Drucksensoren (7a) umfasst, die entlang eines Umfangs angeordnet sind, der um die Längsachse (A) verläuft.

8. Gasturbinenanordnung nach einem der vorhergehenden Ansprüche, wobei mindestens ein zweiter Drucksensor (7b) zwischen dem Diffusor (26) und dem Außengehäuse (31) näher beim Außengehäuse (31) als beim Diffusor (26) angeordnet ist.

9. Gasturbinenanordnung nach einem der vorhergehenden Ansprüche, wobei mindestens ein zweiter Drucksensor (7b) in einem Druckabgriff (43) angeordnet ist, der im Außengehäuse (31) gebildet ist.

10. Gasturbinenanordnung nach Anspruch 9, wobei der Druckabgriff (43) durch ein Rohr (45) definiert ist, das in einem Loch (46) des Außengehäuses (31) untergebracht ist.

11. Gasturbinenanordnung nach einem der Ansprüche 8 bis 10, die mehrere zweite Drucksensoren (7b) umfasst, die entlang eines Umfangs angeordnet sind, der um die Längsachse (A) verläuft.

12. Gasturbinenanordnung nach einem der vorhergehenden Ansprüche, wobei mindestens ein dritter Sensor (7c) am Ende (48) eines Kanals (47) angeordnet ist, der vom Außengehäuse (31) in die Luftkammer (30) verläuft.

13. Gasturbinenanordnung nach Anspruch 12, wobei der Kanal (47) derart orientiert ist, dass das Ende (48) näher beim Auslassdiffusor (26) als beim Außengehäuse (31) angeordnet ist.

14. Gasturbinenanordnung nach Anspruch 12 oder 13, wobei der Kanal (47) in einem Loch (49) des Außengehäuses (31) untergebracht ist.

15. Gasturbinenanordnung nach einem der Ansprüche 12 bis 14, die mehrere dritte Drucksensoren (7c) umfasst, die entlang eines Umfangs angeordnet sind, der um die Längsachse (A) verläuft.

## Revendications

1. Ensemble de turbine à gaz comprenant :
un compresseur (3) configuré pour comprimer de l'air ; le compresseur (3) s'étendant le long d'un axe longitudinal et étant prévu avec un diffuseur de sortie (26) et avec un carter de compresseur (9a) ;
un plénum (30) qui est un volume clos délimité au moins par un carter externe (31) couplé au carter de compresseur (9a) et par le diffuseur de sortie (26) ; le diffuseur de sortie (26) étant conçu pour décharger l'air comprimé dans le plénum (30) ;
une chambre de combustion (4) partiellement agencée dans le plénum (30) ;
**caractérisé par** :
au moins un capteur de pression (7a ; 7a ; 7b ; 7c) faisant face à une zone du plénum (30) comprise entre le carter externe (31) et le diffuseur de sortie (26).

2. Ensemble de turbine à gaz selon la revendication 1, dans lequel le carter externe (31) comprend une partie (32) qui est de forme tronconique ; le au moins un capteur de pression (7 ; 7a ; 7b ; 7c) faisant face à une zone du plénum (30) entre la partie (32) et le diffuseur de sortie (26).

3. Ensemble de turbine à gaz selon la revendication 1 ou 2, dans lequel au moins un premier capteur (7a) est agencé dans la zone du plénum (30) comprise entre le carter externe (31) et le diffuseur de sortie (26) plus à proximité du diffuseur de sortie (26) que du carter externe (31).

4. Ensemble de turbine à gaz selon la revendication 3, dans lequel le diffuseur de sortie (26) comprend au moins deux coques (27a, 27b) définissant un canal ayant une section croissante, qui sont couplées au carter de stator de compresseur (9a) ; la coque (27a) faisant face au plénum (30) qui est prévu avec une première partie (28a) qui est sensiblement cylindrique, et avec une seconde partie (28b) pliée sur la première partie (28a) qui est sensiblement de forme tronconique ; la première partie (28a) définissant une première face externe (29a) ; la seconde partie définissant une seconde face externe (29b).

5. Ensemble de turbine à gaz selon la revendication 4, dans lequel au moins un premier capteur (7a) est agencé afin de faire face à la zone comprise entre la première face externe (29a) et la seconde face externe (29b).

6. Ensemble de turbine à gaz selon l'une quelconque des revendications 3 à 5, dans lequel le premier capteur de pression (7a) est agencé à proximité de la zone de couplage entre le diffuseur de sortie (26) et le carter de stator de compresseur (9a).

7. Ensemble de turbine à gaz selon l'une quelconque des revendications 3 à 6, comprenant une pluralité de premiers capteurs de pression (7a) agencés le long d'une circonférence s'étendant autour de l'axe longitudinal (A).

8. Ensemble de turbine à gaz selon l'une quelconque des revendications précédentes, dans lequel au moins un second capteur de pression (7b) est agencé entre le diffuseur (26) et le carter externe (31) plus près du carter externe (31) que du diffuseur (26).

9. Ensemble de turbine à gaz selon l'une quelconque des revendications précédentes, dans lequel au moins un second capteur de pression (7b) est agencé dans une prise de pression (43) réalisée dans le carter externe (31).

10. Ensemble de turbine à gaz selon la revendication 9, dans lequel la prise de pression (43) est définie par un tube (45) logé dans un trou (46) du carter externe (31).

11. Ensemble de turbine à gaz selon l'une quelconque des revendications 8 à 10, comprenant une pluralité de deuxièmes capteurs de pression (7b) agencés le long d'une circonférence s'étendant autour de l'axe longitudinal (A).

12. Ensemble de turbine à gaz selon l'une quelconque des revendications précédentes, dans lequel au moins un troisième capteur (7c) est agencé au niveau de l'extrémité (48) d'un conduit (47) s'étendant à partir du carter externe (31) dans le plénum (30).

13. Ensemble de turbine à gaz selon la revendication 12, dans lequel le conduit (47) est orienté de sorte que l'extrémité (48) est agencée plus à proximité du diffuseur de sortie (26) que du carter externe (31).

14. Ensemble de turbine à gaz selon la revendication 12 ou 13, dans lequel le conduit (47) est logé dans un trou (49) du carter externe (31).

15. Ensemble de turbine à gaz selon l'une quelconque des revendications 12 à 14, comprenant une pluralité de troisièmes capteurs de pression (7c) agencée le long d'une circonférence s'étendant autour de l'axe longitudinal (A).
